# EUROPEAN PATENT SPECIFICATION

(11) **EP 2 945 892 B1**
(45) Date of publication and mention of the grant of the patent: **08.08.2018**
(21) Application number: 14740925.4
(22) Date of filing: 21.01.2014
(51) Int. Cl.: B65G 47/82

(54) **DEVICE FOR RELIABLY MOVING ARTICLE FROM CONVEYOR SURFACE**
VORRICHTUNG ZUM SICHEREN BEWEGEN EINES GEGENSTANDES VON EINER TRANSPORTFLÄCHE
DISPOSITIF POUR DÉPLACER DE FAÇON FIABLE UN ARTICLE À PARTIR D'UNE SURFACE DE TRANSPORTEUR

(30) Priority: 18.01.2013 US 201361754488 P
(43) Date of publication of application: 25.11.2015
(73) Proprietor: United Sortation Solutions Inc., Owings Mills, Maryland 21117 (US)
(72) Inventor: EISENBERG, Howard, Owings Mills, Maryland 21117 (US)
(74) Representative: Lecca, Patricia S.
(86) International application number: PCT/US2014/012283
(87) International publication number: WO 2014/113774

(56) References cited:
- WO-A1-2008/022940
- DE-A1- 19 547 641
- FR-A1- 2 620 054
- US-A- 1 432 002
- US-A- 5 042 636
- US-A- 5 275 272
- US-A- 5 464 088
- US-A1- 2003 155 213
- US-A1- 2012 024 661
- US-B1- 6 189 702
- US-B1- 6 695 135

## Description

### Introduction and Background to the Invention

The present invention relates to a sorting device according to the preamble of claim 1. Methods for moving packaged, wrapped, or small items traveling on a conveyor to a delivery station or off of a main conveyor have a relatively high fail rate. As one of the critical last steps in sorting packages for delivery, the failure rate at this step requires human intervention, can involve delays, and leads to expense. US5275272 discloses a sorting device according to the preamble of claim 1. The present invention addresses the problems stated above by providing a sorting device according to claim 1 for robust movement of a package or item from the main conveyor line or for sorting the package or item to another conveyor line. In one aspect, the device comprises multiple paddle pieces that are securely linked to each other and are supported by brackets against a flange from a sweeper belt separate from the main conveyor. The sweeper belt controls the movement of the multi-part paddle across the main conveyor surface to direct an item from the main conveyor. Generally, the paddle and sweeper belt are positioned above the main conveyor line or conveying surface. The combination of a secure paddle region and a more flexible bracket or fixture to the sweeper belt unexpectedly provides improved reliability in the sweep or sort process off of a conveyor.

### Brief Summary of the Invention

The embodiments, advantages, and uses described here and exemplified in the drawings are examples of the content of the invention and are not meant to limit the scope of the invention, which is defined by the claims. In a preferred embodiment, a sweeper/sorter assembly sits above a flat main conveyor surface. The assembly comprises a plastic sweeper belt that is positioned to move a paddle perpendicular to the direction of travel of the main conveyor belt. It is not required to use a perpendicular direction, but aspects of the invention can use only a perpendicular direction. At least one and preferably a plurality of paddle modules can be connected to the plastic sweeper belt, preferably two, and embodiments with three paddle modules are shown in the exemplary drawings. Items to be sorted from the main conveyor will travel on the main conveyor belt and will be tracked using one or more electronic eyes. When a desired item for sorting is directly underneath the appropriate sweeper assembly, a signal is given for the drive roller controller to move the drive roller and thus the plastic sweeper belt and paddle module. The direction of the movement can be controlled to the appropriate direction to push or sweep the item by the paddle surface contacting the item, for example to the left or right, and then move the item off of the flat conveyor surface. Furthermore, the sweeper belt and paddle can be controlled to account for the speed of the main conveyor surface so the paddle contacts the desired article or package as it moves into a position directly under the sweeper belt.

The motorized driver roller can be activated by a drive roller controller and can run forwards or backwards. The direction of movement results in the left or right handed divert of the item when contacted by the paddle.

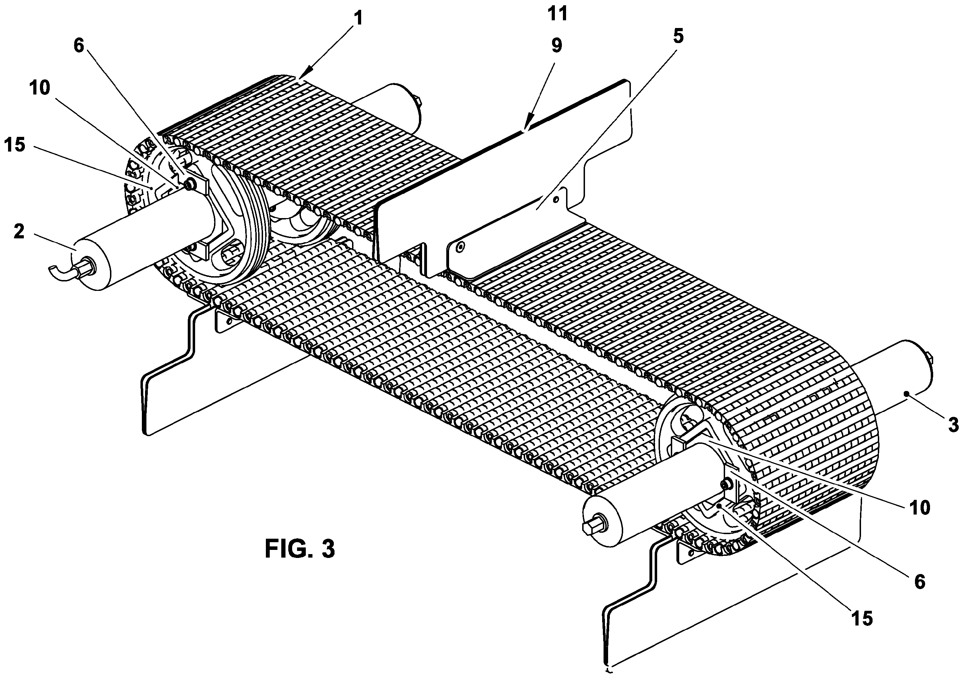

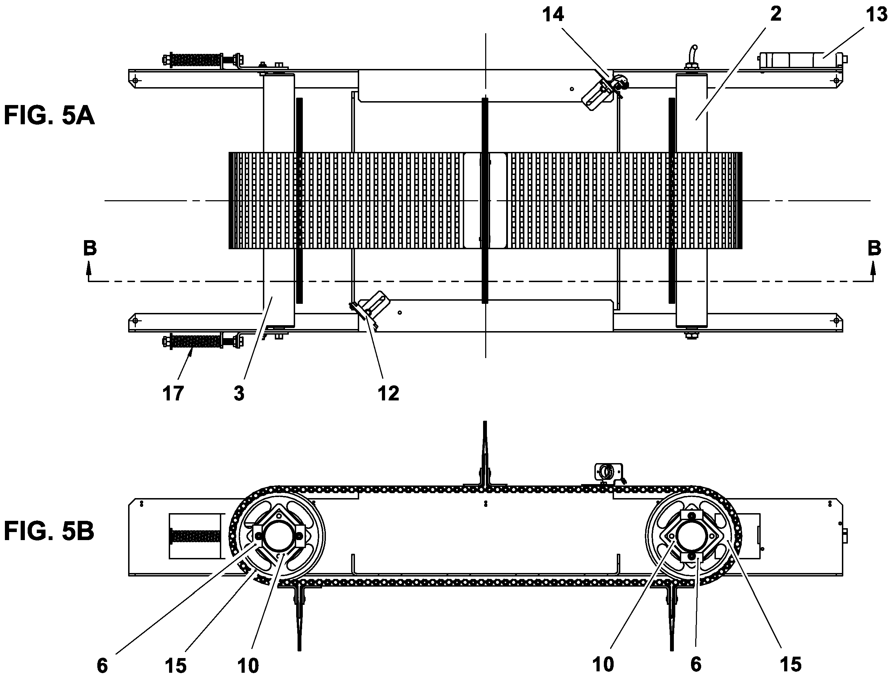

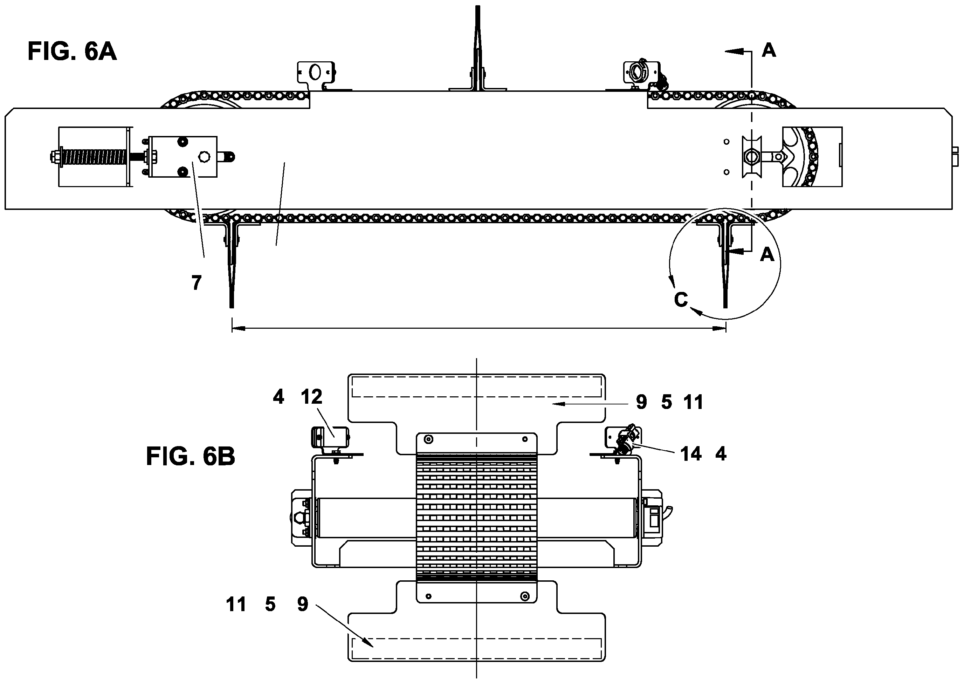

In an embodiment shown in the drawings, there are three sets of paddles (9) in paddle modules that are connected to the plastic sweeper belt (1). As shown, for example in Fig 3, there are two paddle modules on the lower side of the plastic belt and one on the top side. As shown by the arrows depicting the distance between paddles in Fig 6A, the location of each paddle or the distances between paddles can be controlled to account for the fine movement of one or all the paddles at the same time by sensing the position of only one paddle. Controlling the movement of the three module embodiment provides advantages for various types of sorting and quality control functions. The two paddle modules below the belt are positioned to be ready to move an item quickly when needed in either direction. Alternatively, if the sort direction is to only one side, the plastic sweeper belt can turn in one direction so that successive paddles will direct items off the conveyor as the belt continues to turn when directed. In addition, the exact location of each paddle module and paddle can allow the conveyor system a redundant control of the sort function. The photoelectric eyes (14, 12) can be used at multiple places. In one example a photoelectric eye (14 - Fig 5A) senses the position of one paddle above the plastic belt when in the home position (center - Fig 3) and thus the system determines when the plastic belt has moved either left or right based on the known configuration of the second and third paddle modules in relation to the first paddle sensed above the plastic belt by the photoelectric eye. Optionally, paddles or elements of the paddle modules can be coated or contain reflective or coded markings to assist in the fine control of the paddle movements using an electronic eye or other sensor or tracking system as available in the art. Alternatively or in addition, photoelectric eyes can be used to determine the proximity of the sweeper paddle to the surface of the main conveyor and to determine if a package or article on the main conveyor is positioned on the main conveyor surface.

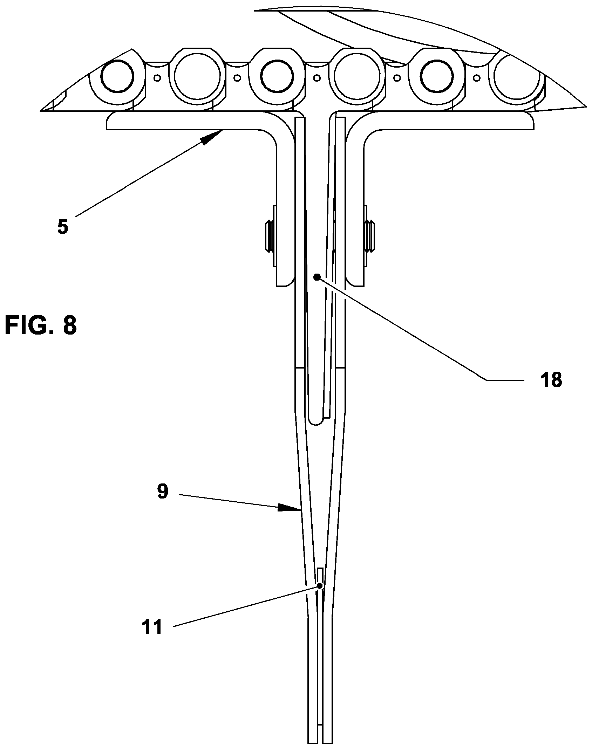

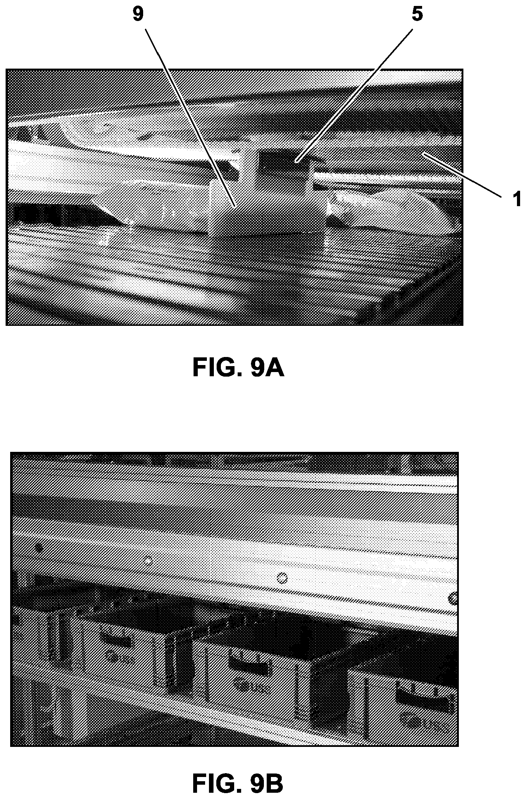

The construction of the paddle (9) and its connection to the plastic belt (1) are designed for robust and reliable use and can be tested to millions of cycles to ensure low failure rates and reliability. The plastic belt is constructed of multiple links. At the point where the paddle is connected to the belt there is a paddle link (18 - Fig. 8) that has a flange molded into a link in the plastic belt or integrated into a formed link of the plastic sweeper belt. One optional design attaches two paddle brackets (5 - one on each side of the link) and two paddle pieces (9) to the paddle link (18) by use of a bolt, screw, rivet, pin, or the like. The two paddle pieces are connected by an adhesive (11) to securely link them to each other. While a two-paddle option is shown in Fig 8, more than two can be used and the paddle surfaces can be composed of multiple elements. The combination of the paddle bracket supported against the belt but not secured to belt directly, and the triangularity of the paddle pieces, work together to create a rigid and strong paddle design. Paddle elements are typically plastic, as some flexibility in the material selected for the paddle is desired. Completely rigid paddle elements, such as those made of stainless steel, can also be used. For embodiments used to sort packaged small items, for example small containers wrapped in mailing packaging (Fig. 9A), a rigid plastic paddle surface is preferred. In general, the selection of paddle surfaces can be a function of the item being sorted, so that the paddle surface moves within a small distance from the surface of the conveyor to ensure that the item is sorted and reduce the possibility that the item will jam on the conveyor or interfere with the sort process. For other, larger items, such as boxes, a metal surface may be preferable (Fig. 9B). The paddle link (18) can effectively be used to change paddles within paddle modules based upon the item being sorted. The paddle contains three or more regions
- a hard region to fix to the belt or a connection to the belt rigidly; a middle region with a high friction coating to contact the packaging or an article on the main conveyor; and an end region that is coated to allow smooth movement over the main conveyor surface. In addition, as the paddle assembly typically resides over the main conveyor surface, the paddle assembly can be moved up or down so that the paddle surface or end of the paddle can be positioned at an optimal location relative to the item being sorted. Factors such as the chance of damaging the item from the paddle, the size of the item, the type of item, the surface or packaging covering the item, and the speed of the conveyor can all dictate an optimum location of the paddle and paddle assembly for a particular system. The paddle assembly can also dynamically move up and down over the surface of the main conveyor in optional embodiments, whereby the distance between the lower end of the paddle and the top surface of the main conveyor can be controlled or adjusted.

In another aspect, the use of a motorized drive roller (2) with a plastic belt (1) forms a unique combination for sweep-type diverters or sorters and here can be important in the reliability of the design. The plastic sweeper belt (1) provides rigidity and accuracy to the design over alternative belt and linkage mechanisms. However, plastic belts and indeed all other belts have a tendency to stretch over time and more so in varying temperature conditions. To create a maintenance free and reliable device, a compression spring (17) can act as an automatic tensioning device to maintain proper a tension on the plastic belt that is used for diverting items. Thus, embodiments of the invention include a rigidly connected paddle link (18) integrated into a sweeper belt above a main conveyor surface where the sweeper belt drive includes a tensioning system, such as a compression spring (17), to correct for any stretch in the sweeper belt.

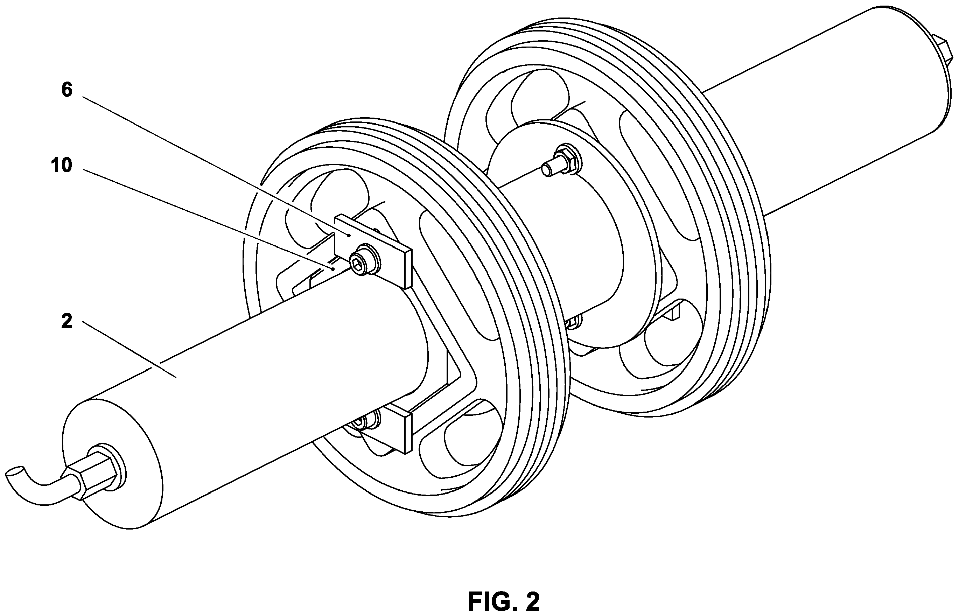

In addition, the attachment of the sprocket (15) to the motorized drive roller (2) should be cost effective and still robust. To accomplish this we have used a novel approach (Fig. 2) whereby welding a flange (10) to the drive roller and then placing a sprocket toe clamp (6) to attach the sprocket to the welded flange results in a strong but replaceable flange/drive roller connection between the two components.

### Brief Description of the Drawings

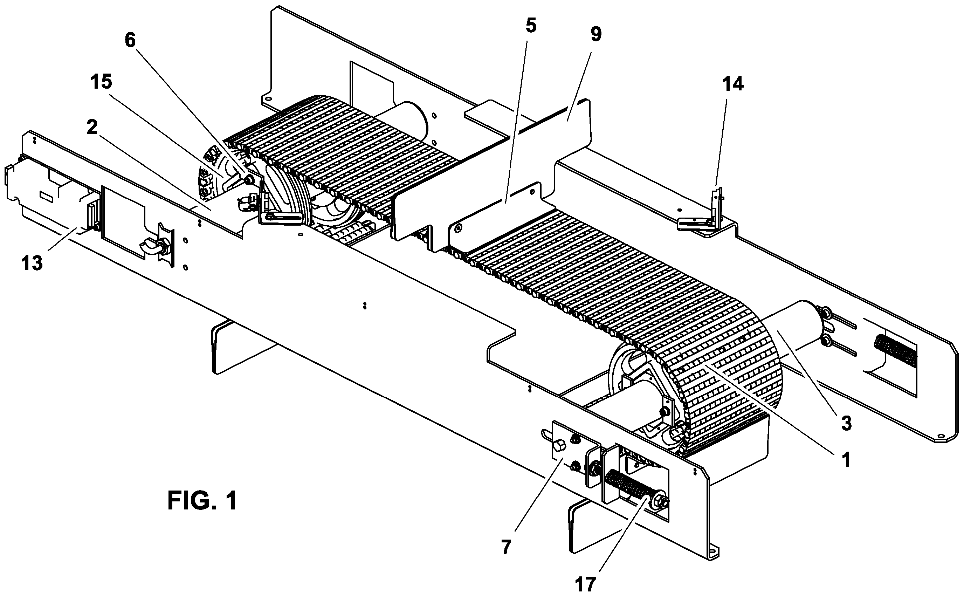

Fig 1: Sweeper Sorter Module including the sweeper belt, belt drive and tensioning system, and paddles.
Fig 2: Detail of Roller - Sprocket Assembly
Fig 3: View of plastic sweeper belt assembly and sprocket assembly with support frame removed.

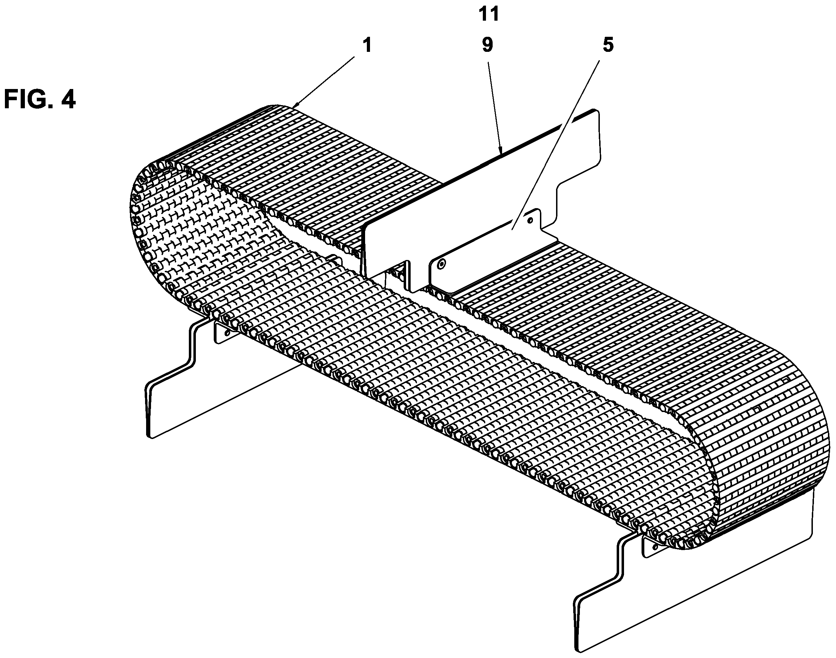

Fig 4: Detail of plastic sweeper belt and embodiment showing spaced three-paddle sweeper assembly.
Fig 5A: Sweeper Sorter Module plan view showing photoelectric eyes and Fig 5B left side view.
Fig 6A:Side view of sweeper sorter module and Fig 6B close-up of end on view.

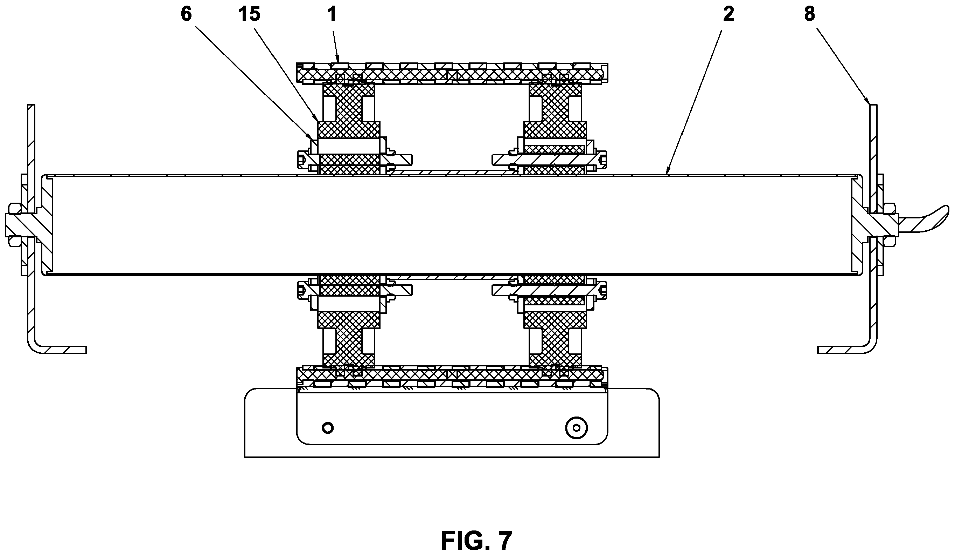

Fig 7: Sweeper Sorter Module cross section view showing sprocket and toe clamp between sweeper belt and drive roller.
Fig 8: Detailed view of embodiment of belt and paddle assembly connections as integrated link into sweeper belt.
Fig 9A: Photo of the paddle over a main conveyor used to sort packaged items and Fig 9B photo of paddle used to sort boxes.

### Detailed Description

In contrast with other conveying systems that use a pusher device to move articles across and off a conveying surface from below or through the bottom of the conveying surface, the present invention employs a more robust sweeping action which can preferably be employed from above the conveying surface. As a result, there are fewer errors in the sorting of packages or other articles during the process of removing them from a conveying surface. In order to move or propel articles or packages from a conveyor surface, the paddle assembly is attached to a rigid belt. In general, the connection between the paddle assembly parts and the rigid belt are designed and built to ensure that the connection has little to no play when the paddle contacts the article on the conveyor surface. The design and construction of the paddle surface itself can be changed to allow some flexibility depending on the articles that are being moved. In addition, the paddle surface can comprise a region where it connects to the sweeper belt and a region where is contacts the article or package and these regions are coated with different elements. The end or tip of the region designed to contact the article is coated to allow it to brush up against the main conveyor surface or within 0.5 to 1mm or within 0.5 to 2 mm of the main conveyor surface.

Thus, in preferred embodiments the invention includes a sorting device for moving an item off of a main conveyor surface that comprises a plastic paddle assembly that is firmly connected to a plastic sweeper belt, where the assembly and belt are positioned over the surface of a main conveyor. One or more electronic eyes can be used for detecting the presence of an object and its position, detecting the fine position of one or more of the paddles, and/or detecting the movement of the article from the main conveyor surface. There is a motorized drive roller employed in the sweeper belt to control the movement of the plastic sweeper belt. Similarly, the sorting device may contain a plastic paddle assembly that is removeably connected to a plastic sweeper belt, for example by a rigid bracket that is fixed to an integrated element of the plastic sweeper belt. The removeable paddles allows easy replacement or options when different articles are moving on the main conveyor surface. Various different paddle surfaces, paddles of different constructions, and various regions on the paddles can thus be used. IN fact, when two or more paddle assemblies are used in the sweeper belt, different paddles can be made of different materials to contact different articles on the main conveyor surface. Thus, both small wrapped packages and larger boxes can be robustly moved off the main conveyor surface in these embodiments without the need of changing the paddle s used. The invention includes aspects where one or more sensors are used for detecting the presence of an item on the main conveyor or its movement from the conveyor, or detecting the position of the one of more paddles. The sorting device can have a paddle made of a rigid plastic or metal material and can be connected to the sweeper belt through an integrated link (18) in the sweeper belt that projects out from the sweeper belt surface to form a surface of affixing the paddle surfaces. Multiple paddle surfaces can be used in one paddle assembly so that, for example, two paddle surfaces are affixed to one projection from the integrated link in the sweeper belt as shown in Fig. 8. The paddle assembly can include a bracket or brace (5) which is comprised of a different material than the paddle (9).

The lower end or tip surface of a paddle or the paddle assembly can be positioned at different distances from the top surface of the main conveyor surface when the paddle assemble is located above the main conveyor. Thus, the sweeper belt can be adjustably connected to a frame that allows the fine positioning of the end surfaces of the paddle and very close movement of the paddle to the main conveyor surface. The paddle assembly can have two ends with rollers to move the plastic sweep belt (1), one end having a drive roller to control the movement of the plastic sweep belt (1), the other end having a compression spring (17) to maintain the tension on the plastic sweeper belt (1). The paddles can be connected to the plastic sweeper belt by a flange in the plastic sweeper belt and at least one bracket fixed to the flange and linking the paddle to the belt.

## Claims

1. A sorting device for moving an item off of a main conveyor surface comprising:
two or more plastic paddles (9) connected to a continuous plastic sweeper belt (1), the connection forming a paddle assembly positioned over the surface of a main conveyor, the main conveyor moving articles to be sorted or moved from the main conveyor surface; an electronic eye (12, 14) for detecting the presence of an object; and a motorized drive roller (2) to control the movement of the continuous plastic sweeper belt (1); wherein the paddle assembly is located above the main conveyor surface, and the paddles (9) of the paddle assembly are positioned to sweep over the main conveyor surface to direct an item off the main conveyor surface, and wherein the surface of said paddles (9) comprises a rigid region for connecting to the sweeper belt (1), **characterized in that** the lower surface of the two or more paddles (9) can be positioned at different distances from the top surface of the main conveyor surface by adjustably connecting the sweeper belt (1) to a frame, thereby allowing the fine positioning of the end surfaces of the paddle and very close movement of the paddle to the main conveyor surface, wherein the surface of said paddles (9) comprises, a center region having a high friction coating to contact an article on the main conveyor surface, and an end region positioned close to the main conveyor surface and coated with an anti-friction coating.

2. A sorting device of claim 1 wherein the two or more plastic paddles (9) are removeably connected to a the continuous, part-circular plastic sweeper belt (1) by a rigid bracket (5) that is fixed to an integrated element of the continuous, part-circular plastic sweeper belt (1).

3. The sorting device of claim 1 or 2, wherein the paddle (9) is made of a rigid plastic and is connected to the sweeper belt (1) through an integrated link (18) of the sweeper belt (1) that projects out from the sweeper belt (9) surface to link to the paddle (9).

4. The sorting device of any one of the preceding claims, wherein the paddle assembly has two ends with rollers to move the plastic sweeper belt (1), one end having a driver roller (2) to control the movement of the plastic sweeper belt, the other end having a compression spring (17) to maintain the tension on the plastic sweeper belt.

5. The device of any one of the preceding claims, wherein the paddle assembly includes a bracket or brace (5) which is comprised of a different material than the paddle (9).

6. The device of any one of the preceding claims, wherein the paddles (9) are connected to the plastic sweeper belt (1) by a flange in the plastic sweeper belt and at least one bracket (5) fixed to the flange and the paddle.

7. The device of any one of the preceding claims, wherein the end of the paddle (9) is positioned between 0.5 mm and 2 mm over the main conveyor surface.

## Patentansprüche

1. Sortiervorrichtung zum Bewegen eines Gegenstands von einer Haupttransportfläche, umfassend:
zwei oder mehrere Kunststoffflügel (9), die mit einem kontinuierlichen Ausräumband aus Kunststoff (1) verbunden sind, wobei die Verbindung eine Flügelbaugruppe bildet, die über der Oberfläche des Hauptförderers positioniert ist, wobei der Hauptförderer Artikel bewegt, die sortiert oder von der Haupttransportfläche bewegt werden sollen; ein elektronisches Auge (12, 14) zum Erkennen der Anwesenheit eines Objekts; und eine motorisierte Antriebsrolle (2) zum Steuern der Bewegung des kontinuierlichen Ausräumbands aus Kunststoff (1); wobei die Flügelbaugruppe über der Haupttransportfläche untergebracht ist, und die Flügel (9) der Flügelbaugruppe so positioniert sind, dass sie über die Haupttransportfläche kehren, um einen Gegenstand von der Haupttransportfläche zu lenken, und wobei die Oberfläche der Flügel (9) eine starre Region umfasst, um das Abräumband (1) zu verbinden, **dadurch gekennzeichnet, dass** die untere Oberfläche des einen oder der mehreren Flügel (9) in unterschiedlichen Abständen von der oberen Oberfläche der Haupttransportfläche durch regulierbares Verbinden des Ausräumbands (1) mit einem Rahmen positioniert werden können, wodurch die Feinpositionierung der Endoberflächen des Flügels und eine sehr nahe Bewegung des Flügels an der Haupttransportfläche ermöglicht wird, wobei die Oberfläche der Flügel (9) eine zentrale Region umfasst, die eine Beschichtung mit hoher Reibung für die Kontaktherstellung zu einem Artikel auf der Haupttransportfläche aufweist, und eine Endregion, die nah an der Haupttransportfläche positioniert ist und mit einer reibungsmindernden Beschichtung beschichtet ist.

2. Sortiervorrichtung nach Anspruch 1, wobei die zwei oder mehreren Kunststoffflügel (9) abnehmbar mit dem kontinuierlichen, teilkreisförmigen Ausräumband aus Kunststoff (1) durch einen starren Träger (5) verbunden sind, der an einem integrierten Element des kontinuierlichen, teilkreisförmigen Ausräumbands aus Kunststoff (1) befestigt ist.

3. Sortiervorrichtung nach Anspruch 1 oder 2, wobei der Flügel (9) aus starrem Kunststoff hergestellt ist und mit dem Ausräumband (1) über eine integrierte Verknüpfung (18) des Ausräumbands (1) verbunden ist, das von der Oberfläche des Ausräumbands (9) hervorsteht, um den Flügel (9) zu verknüpfen.

4. Sortiervorrichtung nach einem der vorstehenden Ansprüche, wobei die Flügelbaugruppe zwei Enden mit Rollen aufweist, um das Ausräumband aus Kunststoff (1) zu bewegen, wobei ein Ende eine Antriebsrolle (2) aufweist, um die Bewegung des Ausräumbands aus Kunststoff zu steuern, und das andere Ende eine Druckfeder (17) aufweist, um die Spannung am Ausräumband aus Kunststoff aufrecht zu erhalten.

5. Vorrichtung nach einem der vorstehenden Ansprüche, wobei die Flügelbaugruppe einen Träger oder Arm (5) einschließt, der aus einem anderen Material als der Flügel (9) besteht.

6. Vorrichtung nach einem der vorstehenden Ansprüche, wobei die Flügel (9) mit dem Ausräumband aus Kunststoff (1) über einen Flansch am Ausräumband aus Kunststoff und mindestens einen am Flansch und dem Flügel befestigten Träger (5) verbunden sind.

7. Vorrichtung nach einem der vorstehenden Ansprüche, wobei das Ende des Flügels (9) zwischen 0,5 mm und 2 mm über der Haupttransportfläche positioniert ist.

## Revendications

1. Dispositif de tri pour déplacer un article hors d'une surface de transporteur principal comprenant :
deux ou plus palettes en plastique (9) reliées à une courroie de balayage en plastique continue (1), la liaison formant un ensemble de palette positionné au-dessus de la surface d'un transporteur principal, le transporteur principal déplaçant des articles à trier ou à déplacer à partir de la surface de transporteur principal ; un oeil électronique (12, 14) pour détecter la présence d'un objet ; et un rouleau d'entraînement motorisé (2) pour commander le mouvement de la courroie de balayage en plastique continue (1) ; dans lequel l'ensemble de palette est situé au-dessus de la surface de transporteur principal et les palettes (9) de l'ensemble de palette sont positionnées de façon à balayer la surface de transporteur principal pour diriger un article hors de la surface de transporteur principal, et dans lequel la surface desdites palettes (9) comprend une région rigide destinée à être reliée à la courroie de balayage (1), **caractérisé en ce que** la surface inférieure des deux ou plus palettes (9) peut être positionnée à des distances différentes de la surface supérieure de la surface de transporteur principal en reliant de manière réglable la courroie de balayage (1) à un cadre, permettant ainsi le positionnement précis des surfaces d'extrémité de la palette et un déplacement très proche de la palette par rapport à la surface de transporteur principal, dans lequel la surface desdites palettes (9) comprend une région centrale ayant un revêtement à coefficient de frottement élevé pour venir au contact d'un article sur la surface de transporteur principal, et une région d'extrémité positionnée près de la surface de transporteur principal et revêtue d'un revêtement anti-frottement.

2. Dispositif de tri selon la revendication 1, dans lequel les deux ou plus palettes en plastique (9) sont reliées de manière amovible à la courroie de balayage en plastique partiellement circulaire continue (1) par un support rigide (5) qui est fixé à un élément intégré de la courroie de balayage en plastique partiellement circulaire continue (1).

3. Dispositif de tri selon la revendication 1 ou 2, dans lequel la palette (9) est faite en plastique rigide et est reliée à la courroie de balayage (1) par l'intermédiaire d'une liaison intégrée (18) de la courroie de balayage (1) qui fait saillie de la surface de la courroie de balayage (9) pour la liaison avec la palette (9).

4. Dispositif de tri selon l'une quelconque des revendications précédentes, dans lequel l'ensemble de palette possède deux extrémités avec des rouleaux pour déplacer la courroie de balayage en plastique (1), une extrémité ayant un rouleau d'entraînement (2) pour commander le déplacement de la courroie de balayage en plastique, l'autre extrémité ayant un ressort de compression (17) pour maintenir la tension sur la courroie de balayage en plastique.

5. Dispositif selon l'une quelconque des revendications précédentes, dans lequel l'ensemble de palette comprend un support ou élément de retenue (5) qui est constitué d'un matériau différent de celui de la palette (9).

6. Dispositif selon l'une quelconque des revendications précédentes, dans lequel les palettes (9) sont reliées à la courroie de balayage en plastique (1) par une bride dans la courroie de balayage en plastique et au moins un support (5) fixé à la bride et à la palette.

7. Dispositif selon l'une quelconque des revendications précédentes, dans lequel l'extrémité de la palette (9) est positionnée entre 0,5 mm et 2 mm au-dessus de la surface de transporteur principal.
